# EUROPEAN PATENT APPLICATION

(11) **EP 4 656 693 A1**
(43) Date of publication of application: **03.12.2025**
(21) Application number: 25177872.6
(22) Date of filing: 21.05.2025
(51) Int. Cl.: C09D 11/101, C09D 11/322, C09D 11/38

(54) **ACTINIC RADIATION-CURABLE INKJET INK AND METHOD FOR PRODUCING PRINTED PRODUCT USING THE SAME**

(30) Priority: 27.05.2024 JP 2024085716
(71) Applicant: KONICA MINOLTA, INC., Tokyo 100-7015 (JP)
(72) Inventor: KAWASAKI, Hidekazu, Tokyo, 100-7015 (JP)
(74) Representative: MFG Patentanwälte Meyer-Wildhagen Meggle-Freund Gerhard PartG mbB

(57) **Abstract**

An object of the present invention is to provide an actinic radiation-curable inkjet ink containing a gelling agent and capable of obtaining satisfactory dispersion stability of a pigment and a high weather resistance of an obtained printed product. An actinic radiation-curable inkjet ink that achieves the object is an actinic radiation-curable inkjet ink containing a photopolymerizable compound, a photoinitiator, a gelling agent, a pigment, a dispersion aid, and a pigment-dispersing agent, and the dispersion aid contains a compound having a specific structure, and the pigment contains a compound having a specific structure.

## Description

### BACKGROUND OF THE INVENTION

### 1. Field of the Invention

The present invention relates to an actinic radiation-curable inkjet ink and a method for producing a printed product using the same.

### 2. Description of Related Art

Image formation by an inkjet method is used in various printing fields because an image can be formed easily and inexpensively. As one of the image forming methods, there is a method in which liquid droplets of an actinic radiation-curable inkjet ink are landed on a recording medium and then cured by irradiation with active rays to form an image. According to the method, an image having high abrasion resistance and adhesion can be formed even on a recording medium having no ink absorbency.

Here, in an image forming method using the above-described actinic radiation-curable inkjet ink, it has been studied to perform high-speed recording, for example, to perform high-speed recording by a single-pass image forming method, a high-speed serial image forming method with a small number of passes, or the like. However, in the case of forming an image with a small number of passes, it is necessary to drop the actinic radiation-curable inkjet ink more densely than in the case of forming an image with a plurality of passes. Therefore, there has been a problem that an interval between adjacent ink droplets (dots) becomes small, the adjacent dots are more likely to coalesce, and image quality is more likely to deteriorate. In order to suppress such coalescence of adjacent dots, enhancing the pinning property of an actinic radiation-curable inkjet ink has been studied.

As a method of enhancing the pinning property of an actinic radiation-curable inkjet ink, for example, adding a gelling agent to an ink to cause a sol-gel phase transition by temperature has been studied. That is, it has been studied to suppress the coalescence of liquid droplets by ejecting ink droplets in a liquid state at a high temperature, landing the ink droplets on a recording medium, and at the same time, cooling and gelling the ink droplets (U.S. Patent Application Publication No. 2007/0058020).

### SUMMARY OF THE INVENTION

### Technical Problem

However, among the various inks containing the gelling agent, the yellow ink tends to have low stability. Usually, a pigment-dispersing agent for stabilizing the pigment is used in the ink. However, a yellow pigment (in particular, an azo pigment) often does not have a group that forms a stable bond with a pigment-dispersing agent, and it has been difficult to enhance the stability of a yellow ink. Here, in order to increase the affinity between the pigment and the pigment-dispersing agent, a dispersion aid may be used. However, the yellow pigment has a high affinity for the gelling agent. Therefore, the pigment is more likely to interact with the gelling agent without interacting with the dispersion aid. When the pigment and the gelling agent interact with each other, the dispersion aid hardly interacts with the pigment. As a result, the pigment-dispersing agent was less likely to sufficiently function, and the dispersion stability of the pigment was less likely to increase. Furthermore, the function of the gelling agent itself also decreases, image formation failure tends to occur, and furthermore, the weather resistance of the obtained image tends to be low.

The present invention has been made in view of the above-mentioned circumstances. An object of an aspect of the present invention is to provide an actinic radiation-curable inkjet ink containing a gelling agent, in which the dispersion stability of the pigment is favorable, and the weather resistance of the printed product obtained is high. Another object of an aspect of the present invention is to provide a method for producing a printed product using the actinic radiation-curable inkjet ink.

### Solution to Problem

One aspect of the present invention for achieving the above-described objects provides the following:
An actinic radiation-curable inkjet ink, comprising a photopolymerizable compound, a photoinitiator, a gelling agent, a pigment, a dispersion aid, and a pigment-dispersing agent, in which:
the dispersion aid contains a compound represented by a general formula (S) below: 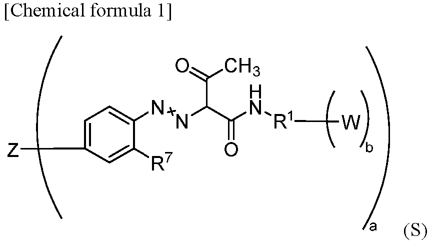 (in the general formula (S),
   R⁷ represents an atom or a monovalent group selected from the group consisting of a hydrogen atom, a halogen atom, a hydroxy group, a substituted or unsubstituted alkyl group, a substituted or unsubstituted alkoxy group, and a carboxy group,
   R¹ represents a monovalent or divalent group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, a carboxy group, an ether bond, and combinations thereof,
   Z represents an a-valent atom or group selected from the group consisting of a single bond, a hydrogen atom, a halogen atom, a hydroxy group, an amino group, a substituted or unsubstituted alkoxy group, a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, and combinations thereof,
   W represents an acidic group selected from a phosphate group, a sulfonic acid group, a sulfonate group, and a nitrate group,
   a represents 1 or 2 and b represents 0 or 1, and
   when a is 1, b is 1, and when a is 2, at least one b is 1); and
the pigment contains a compound represented by a general formula (P) or a general formula (Q) below: 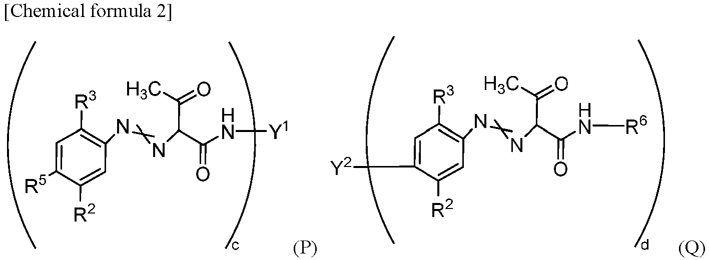 (in the general formula (P) and the general formula (Q),
   R², R³, and R⁵ each independently represent an atom or a monovalent group selected from the group consisting of a hydrogen atom, a halogen atom, a hydroxy group, a nitro group, a substituted or unsubstituted alkyl group, a substituted or unsubstituted alkoxy group, a carbonyl group, a carboxy group, and combinations thereof,
   R⁶ represents a monovalent group selected from the group consisting of a hydrogen atom, a substituted or unsubstituted alkyl group, a substituted or unsubstituted aryl group, and combinations thereof,
   Y¹ represents a c-valent group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, an ether bond, and combinations thereof,
   Y² represents a d-valent group selected from the group consisting of a single bond, a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, an ether bond, and combinations thereof, and
   c and d each independently represent 1 or 2).

Furthermore, one aspect of the present invention for achieving the above-described objects provides a method for producing a printed product, the method including:
ejecting an ink droplet of the actinic radiation-curable inkjet ink from an inkjet recording head to cause the ink droplet to land on a recording medium; and irradiating the ink droplet having landed on the recording medium with an active ray to cure the ink droplet.

### Advantageous Effects of Invention

According to one aspect of the present invention, there is provided an actinic radiation-curable inkjet ink in which the dispersion stability of the pigment is favorable, and the weather resistance of the printed product obtained is high. In addition, according to an aspect of the present invention, a method for producing a printed product having high quality and high weather resistance is provided.

### DESCRIPTION OF THE PREFERRED EMBODIMENTS

Hereinafter, an embodiment of the present invention will be described in detail. However, the present invention is not limited to the following embodiments.

### 1. Actinic radiation-curable inkjet ink

The actinic radiation-curable inkjet ink of the present embodiment contains a photopolymerizable compound, a photoinitiator, a gelling agent, a pigment, a dispersion aid, and a pigment-dispersing agent. In the present specification, the "actinic radiation-curable inkjet ink" (hereinafter, also referred to as "ink") means an ink curable by active rays. In addition, the "active ray" means a ray capable of curing the ink by activating the photoinitiator in the ink. Examples of the active rays include α-rays, γ-rays, X-rays, ultraviolet rays, and electron beams. Note that the active rays for curing the ink according to the present embodiment are preferably ultraviolet rays and electron beams, more preferably ultraviolet rays, from the viewpoint of the availability of an irradiation device, the curability of the ink, and the like.

In the present embodiment, as described below, the dispersion aid contains a compound having a structure represented by the following general formula (S). The pigment includes a compound represented by the general formula (P) or a compound represented by the general formula (Q).

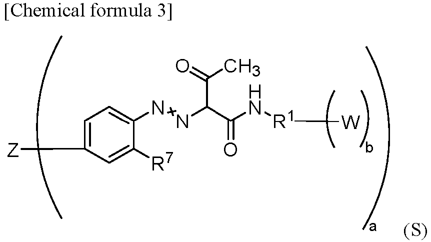

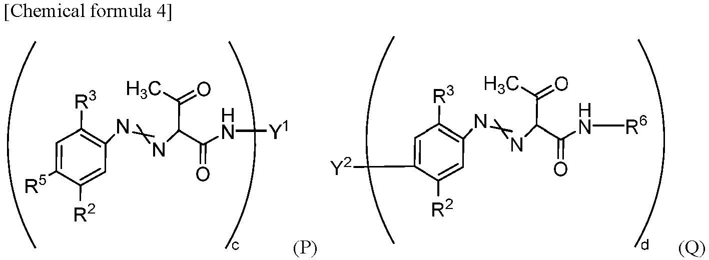

That is, the dispersion aid and the pigment have the following common structure. 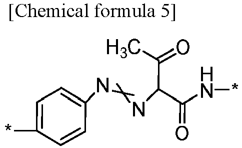 (* represents a bond)

When the pigment and the dispersing aid have the above common structure, they are less likely to interfere with each other sterically and are more likely to stack. As a result, the pigment and the dispersion aid preferentially tend to be coordinated, and the dispersion aid tends to be coordinated around the pigment. Next, the dispersion aid coordinated around the pigment interacts with the pigment-dispersing agent, so that the pigment-dispersing agent is arranged around the pigment via the dispersion aid. Therefore, the dispersion stability of the pigment in the ink is improved, and for example, the pigment is not easily aggregated even at a high temperature. In addition, since the dispersion aid or the pigment-dispersing agent is disposed around the pigment, the pigment and the gelling agent are less likely to interact with each other. Therefore, the gelling agent can increase the pinning property of the ink, making it easier to obtain high-definition and high-quality printed product. Furthermore, since a dispersion aid or a pigment-dispersing agent is disposed around the pigment, the pigment is less likely to be degraded by water, ultraviolet light, or the like in printed product (a cured product of the ink). Therefore, the weather resistance of the obtained image is improved. Hereinafter, each component will be described.

### [Photopolymerizable Compound]

The actinic radiation-curable inkjet ink according to the present embodiment includes a photopolymerizable compound. The photopolymerizable compound may be any compound that is polymerized by irradiation with active rays, and the photopolymerizable compound may be a radically polymerizable compound or a cationically polymerizable compound. It is preferable that the photopolymerizable compound is a radically polymerizable compound from the viewpoint of the curability thereof.

The radically polymerizable compound can be a compound (a monomer, an oligomer, a polymer, or a mixture of these) having a radically polymerizable ethylenically unsaturated bond. The ink may contain only one type of radically polymerizable compound as the photopolymerizable compound, or may contain two or more types.

Examples of the compound having a radically polymerizable ethylenically unsaturated bond include a unsaturated carboxylic acid and a salt thereof, an unsaturated carboxylic acid ester compound, an unsaturated carboxylic acid urethane compound, an unsaturated carboxylic acid amide compound and an anhydride thereof, an acrylonitrile, a styrene, an unsaturated polyester, an unsaturated polyether, an unsaturated polyamide, and an unsaturated urethane. Examples of the unsaturated carboxylic acid include a (meth) acrylic acid, an itaconic acid, an crotonic acid, an isocrotonic acid, and a maleic acid.

Among the above, the radically polymerizable compound is preferably an unsaturated carboxylic acid ester compound, and more preferably a (meth)acrylate-based compound. Note that in the present specification, the term "(meth)acrylate" includes acrylate, methacrylate, and a mixture thereof.

Examples of the (meth)acrylate-based compound include the following:
monofunctional monomers such as isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth) acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobomyl (meth)acrylate, 2-hydroxyethyl (meth)acrylate, 2-hydroxypropyl (meth)acrylate, 2-hydroxy-3-phenoxypropyl (meth)acrylate, 2-(meth) acryloyloxyethylsuccinic acid, 2-(meth) acryloyloxyethylphthalic acid, 2-(meth) acryloyloxyethyl-2-hydroxyethyl-phthalic acid and t-butylcyclohexyl (meth)acrylate;
bifunctional monomers such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A-PO adduct di(meth)acrylate, neopentyl glycol hydroxypivalate di(meth)acrylate, polytetramethylene glycol di(meth)acrylate, polyethylene glycol diacrylate, tripropylene glycol diacrylate, and tricyclodecane dimethanol diacrylate;
trifunctional or higher polyfunctional monomers such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerolpropoxy tri(meth)acrylate, pentaerythritol ethoxy tetra(meth)acrylate, ethylene oxide-modified trimethylolpropane tri(meth)acrylate, propylene oxide-modified trimethylolpropane tri(meth)acrylate, ethylene oxide-modified pentaerythritol tetraacrylate, caprolactone-modified trimethylolpropane tri (meth)acrylate, and caprolactam-modified dipentaerythritol hexa(meth)acrylate; polymers (oligomers) of the above monomers; mixtures of the above monomers and oligomers; and modified products thereof.

When the (meth)acrylate-based compound is a modified product of the monomer, the modified product may contain a polymerizable functional group other than the unsaturated double bond in the structure thereof. Examples of the (meth)acrylate-based compound having a polymerizable functional group include an amine-modified (meth)acrylate oligomer, an epoxy (meth)acrylate oligomer, an aliphatic urethane (meth)acrylate oligomer, an aromatic urethane (meth)acrylate oligomer, a polyester (meth)acrylate oligomer, and a linear (meth) acryl oligomer.

Among the (meth)acrylate-based compounds, stearyl (meth)acrylate, lauryl (meth)acrylate, isostearyl (meth)acrylate, ethoxydiethylene glycol (meth)acrylate, isobomyl (meth)acrylate, tetraethylene glycol di(meth)acrylate, glycerin propoxy tri (meth)acrylate, tripropylene glycol di(meth)acrylate, polyethylene glycol di(meth)acrylate;(propylene oxide-modified) trimethylolpropane tri (meth)acrylate, ditrimethylolpropane tetra (meth)acrylate, and amine-modified (meth)acrylate oligomers are preferable from the viewpoint of photosensitivity and the like.

On the other hand, examples of the cationically polymerizable compound which may be a photopolymerizable compound include an epoxy compound, a vinyl ether compound, and an oxetane compound. The ink may contain only one type of cationically polymerizable compound as the photopolymerizable compound, or may contain two or more types thereof.

The epoxy compound may be an aromatic epoxide, a cycloaliphatic epoxide, an aliphatic epoxide, and the like. Among these, aromatic epoxides and alicyclic epoxides are preferable from the viewpoint of increasing the curability of the ink.

The aromatic epoxide may be a di- or polyglycidyl ether obtained by reacting a polyhydric phenol or an alkylene oxide adduct thereof with epichlorohydrin. Examples of the polyhydric phenol or an alkylene oxide adduct thereof to be reacted include bisphenol A or an alkylene oxide adduct thereof. The alkylene oxide in the alkylene oxide adduct may be ethylene oxide, propylene oxide, or the like.

The alicyclic epoxide may be a cycloalkane oxide-containing compound obtained by epoxidizing a cycloalkane-containing compound with an oxidizing agent such as hydrogen peroxide or a peracid. The cycloalkane in the cycloalkane oxide-containing compound may be cyclohexene or cyclopentene.

The aliphatic epoxide may be a di- or polyglycidyl ether obtained by reacting an aliphatic polyhydric alcohol or an alkylene oxide adduct thereof with epichlorohydrin. Examples of the aliphatic polyhydric alcohol include alkylene glycols such as ethylene glycols, propylene glycols, and 1,6-hexanediol. The alkylene oxide in the alkylene oxide adduct may be ethylene oxide, propylene oxide, or the like.

Examples of vinyl ether compounds include the following:
monovinyl ether compounds such as ethyl vinyl ether, N-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, N-propyl vinyl ether, isopropyl vinyl ether, isopropenyl ether-o-propylene carbonate, dodecyl vinyl ether, diethylene glycol monovinyl ether, and octadecyl vinyl ether; and
di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether; and the like. Among these vinyl ether compounds, di- or tri-vinyl ether compounds are preferable in consideration of curability, adhesion, and the like.

The oxetane compound is a compound having an oxetane ring. Examples thereof include oxetane compounds described in Japanese Unexamined Patent Publication No. 2001-220526, Japanese Unexamined Patent Publication No. 2001-310937, Japanese Unexamined Patent Publication No. 2005-255821. Compounds represented by general formula (1) described in paragraph 0089, general formula (2) described in paragraph 0092, general formula (7) described in paragraph 0107, general formula (8) described in paragraph 0109, and general formula (9) described in paragraph 0116 of Japanese Unexamined Patent Publication No. 2005-255821 are preferred. General formulae (1), (2), (7), (8), and (9) described in Japanese Unexamined Patent Publication No. 2005-255821 are shown below.

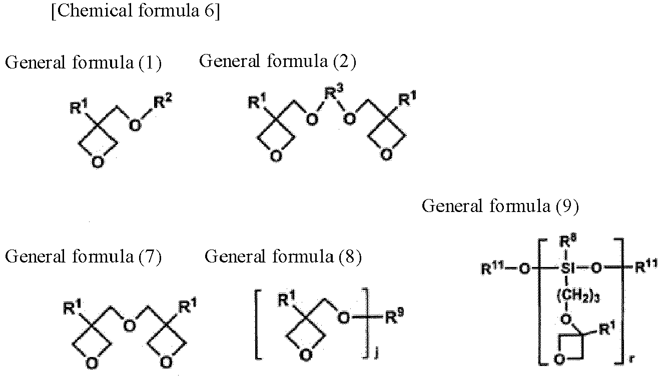

Here, the content of the photopolymerizable compound in the ink is preferably 1% by mass or more and 97% by mass or less, more preferably 30 to 95% by mass, relative to the total mass of the ink.

### [Photoinitiator]

The photoinitiator may be any compound that can be activated by irradiation with active rays to initiate polymerization of the photopolymerizable compound. The photoinitiator may be of an intramolecular bond cleavage type or an intramolecular hydrogen abstraction type.

Examples of the intramolecular bond cleavage type photoinitiator include acetophenone-based initiators such as diethoxyacetophenone, 2-hydroxy-2-methyl-1-phenylpropan-1-one, benzyldimethylketal, 1-(4-isopropylphenyl)-2-hydroxy-2-methylpropan-1-one, 4-(2-hydroxyethoxy) phenyl-(2-hydroxy-2-propyl) ketone, 1-hydroxycyclohexylphenylketone, 2-methyl-2-morpholino (4-thiomethylphenyl) propan-1-one, and 2-benzyl-2-dimethylamino-1-(4-morpholinophenyl)-butanone; benzoin-based initiators such as benzoin, benzoin methyl ether, and benzoin isopropyl ether; acylphosphine oxide-based initiators such as 2,4,6-trimethylbenzoin diphenylphosphine oxides; benzyl glyoxyester-based initiators, and methylphenyl glyoxyester-based initiators.

Examples of the intramolecular hydrogen-abstraction type photoinitiator include benzophenone-based initiators such as benzophenon, methyl o-benzoylbenzoate-4-phenylbenzophenone, 4,4'-dichlorobenzophenone, hydroxybenzophenone, 4-benzoyl-4'-methyl-diphenyl sulfide,acrylated benzophenon, 3,3',4,4'-tetra (t-butylperoxycarbonyl) benzophenon, and 3,3'-dimethyl-4-methoxybenzophenone; thioxanthone-based initiators such as 2-isopropylthioxanthone, 2,4-dimethylthioxanthone, 2,4-diethylthioxanthone, and 2,4-dichlorothioxanthone; aminobenzophenone-based initiators such as Michler's ketone and 4,4'-diethylaminobenzophenone; 10-butyl-2-chloroacridone, 2-ethylanthraquinone, 9,10-phenanthrenequinone, and camphorquinone.

When the photoinitiator is an acylphosphine oxide or an acyl phosphonate, the sensitivity to active rays becomes satisfactory, and the curability of the ink becomes satisfactory. More preferably, the photoinitiator is bis(2,4,6-trimethylbezoyl)-phenylphosphineoxide, bis(2,6-dimethoxybenzoyl)-2, 4,4-trimethyl-pentylphosphineoxide.

Note that the photoinitiator may be a photoacid generator. Examples of the photoacid generator include compounds used for a chemically amplified photoresist and photocationic polymerization (see "Organic Materials for Imaging", edited by The Society for the Study of Organic Electronics Materials, Bunshin Shuppan (1993), pages 187 to 192).

The content of the photoinitiator in the ink is appropriately selected also according to the active rays to be applied in curing the ink, the type of the photopolymerizable compound, and the like. The content of the photoinitiator is preferably 0.1% by mass or more and 10% by mass or less, more preferably 2% by mass or more and 8% by mass or less relative to the total mass of the ink.

### [Gelling agent]

The gelling agent in the present specification is "an organic substance that is solid at normal temperature and becomes liquid when heated, and is a compound having a function of causing the actinic radiation-curable inkjet ink to undergo a temperature-induced reversible sol-gel phase transition".

The gelling agent is preferably a compound that crystallizes at a temperature equal to or lower than the gelation temperature of the ink. The gelation temperature of the ink refers to a temperature at which the gelling agent undergoes a phase transition from sol to gel and the viscosity of the ink suddenly changes when the ink that has been solated or liquefied by heating is cooled. Specifically, the solated or liquefied ink is cooled while its viscosity is measured with a viscoelasticity measuring apparatus (e.g., MCR300, manufactured by Physica), and the temperature at which the viscosity rapidly increases is defined as the gelation temperature of the ink.

When the gelling agent is crystallized in the ink, a structure in which the photopolymerizable compound is included in a three dimensional space formed by the gelling agent crystallized in a plate shape may be formed. In the present specification, such a structure is also referred to as a "card house structure". Then, when the card house structure is formed in the ink, the photopolymerizable compound is held in the space. Therefore, the ink droplet is less likely to wet-spread, and the pinning property of the ink is enhanced. When the pinning property of the ink is enhanced, the ink droplets landed on the recording medium are less likely to coalesce with each other, and thus a higher-definition image can be formed.

In order to hold the photopolymerizable compound in the card house structure, the photopolymerizable compound and the gelling agent are preferably compatible with each other in the ink. In addition, from the viewpoint of stably ejecting ink droplets from an inkjet recording apparatus, it is preferable that the compatibility between the photopolymerizable compound and the gelling agent is satisfactory.

Here, examples of the gelling agent include the following: aliphatic ketone compound; aliphatic ester compound; petroleum-based waxes such as paraffin wax, microcrystalline wax, and petrolatum; vegetable waxes such as candelilla wax, carnauba wax, rice wax, Japan wax, jojoba oil, jojoba solid wax, and jojoba esters; animal waxes such as beeswax, lanolin, and spermaceti; mineral waxes such as montan wax and hydrogenated wax; hydrogenated castor oil or a hydrogenated castor oil derivative; and a modified wax such as a montan wax derivative, a paraffin wax derivative, a microcrystalline wax derivative, or a polyethylene wax derivative; higher fatty acids such as behenic acid, arachidic acid, stearic acid, palmitic acid, myristic acid, lauric acid, oleic acid, and erucic acid; and higher alcohols such as stearyl alcohol and behenyl alcohol; hydroxystearic acids, such as 12-hydroxystearic acid; 12-hydroxystearic acid derivatives; fatty acid amides such as lauric acid amide, stearic acid amide, behenic acid amide, oleic acid amide, erucic acid amide, ricinoleic acid amide, and 12-hydroxystearic acid amide (e.g., Nikkaamide series manufactured by Nippon Kasei Chemical Co., Ltd., Itowax series manufactured by Itoh Oil Chemicals Co., Ltd, and FATTYAMID series manufactured by Kao Corporation); N-substituted fatty acid amides such as stearyl stearic acid amide and N-oleyl palmitic acid amide; special fatty acid amides such as N,N'-ethylenebisstearylamide, N,N'-ethylenebis-12-hydroxystearylamide, and N,N'-xylylenebisstearylamide; higher amines such as dodecylamine, tetradecylamine or octadecylamine; fatty ester compounds such as stearylstearic acid, oleylpahnitic acid, glycerin-fatty ester, sorbitan-fatty ester, propylene-glycol-fatty ester, ethylene-glycol-fatty ester, and polyoxyethylene-fatty ester (e.g., EMALLEX series manufactured by Nippon Emulsion Co., Ltd., RIKEMAR series manufactured by Riken Vitamin Co., Ltd, and Poem series manufactured by Riken Vitamin Co., Ltd); sucrose fatty acid esters such as sucrose stearic acid and sucrose palmitic acid (e.g., Ryoto Sugar Ester Series, manufactured by Mitsubishi Chemical Foods Corporation); synthetic waxes such as polyethylene wax and α-olefin-maleic anhydride copolymer wax (e.g., UNILIN series available from Baker - Petrolite Corporation); dimer acids; dimer diols (PRIPOR series manufactured by CRODA, and the like); fatty acid inulins such as inulin stearate; fatty acid dextrins such as dextrin palmitate and dextrin myristate (Rheopearl series manufactured by Chiba Flour Milling Co., Ltd., etc); glyceryl behenate eicosanedioate; eicosanpolyglyceryl behenate (Nomcoat series and the like manufactured by Nisshin Oillio Group, Ltd); amide compounds such as N-lauroyl-L-glutamic acid dibutylamide and N-(2-ethylhexanoyl)-L-glutamic acid dibutylamide (available from Ajinomoto Fine - Techno Co., Inc); dibenzylidene sorbitols such as 1,3,2,4-bis-O-benzylidene-D-glucitol (Gelol D, available from New Japan Chemical Co., Ltd); and low-molecular oil gelling agents described in Japanese Unexamined Patent Publication No. 2005-126507, Japanese Unexamined Patent Publication No. 2005-255821 and Japanese Unexamined Patent Publication No. 2010-111790.

The gelling agent preferably contains a linear or branched alkyl group having 12 or more and 26 or less carbon atoms in the molecular structure. When the gelling agent contains the alkyl group, the above-described "card house structure" is easily formed. When the gelling agent contains a linear alkyl group having 12 or more and 26 or less carbon atoms in the molecular structure, the card house structure is more easily formed.

Specific examples of the gelling agent containing a linear or branched alkyl group having 12 or more and 26 or less carbon atoms include aliphatic ketone compounds, aliphatic ester compounds, higher fatty acids, higher alcohols, fatty acid amides, and the like, which have the above-described alkyl group.

The gelling agent is more preferably an aliphatic ketone compound or an aliphatic ester compound, and is preferably a compound represented by the following general formula (G1) or (G2).

R1-CO-R2 ... General formula (G1)

R3-COO-R4 ... General formula (G2)

In the general formulae (G1) and (G2), R1 to R4 each independently represent a linear or branched alkyl group having 12 or more and 26 or less carbon atoms. R1 to R4 may each partially include a branched-chain moiety.

In the general formula (G1), the alkyl groups represented by R1 and R2 are not particularly limited, but are preferably alkyl groups having 12 or more and 26 or less carbon atoms and not containing a branched chain.

Examples of the aliphatic ketone compound represented by the general formula (G1) include 18-pentatriacontanone (C17-C17), dilignoceryl ketone (C24-C24), dibehenyl ketone (C22-C22), distearyl ketone (C18-C18), dieicosyl ketone (C20-C20), dipalmityl ketone (C16-C16), dimyristyl ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14-C18), myristyl behenyl ketone (C14-C22), palmityl stearyl ketone (C16-C18), palmityl behenyl ketone (C16-C22), and stearyl behenyl ketone (C18-C22).

Examples of commercially available products of the compound represented by the general formula (G1) include 18-Pentatriacontanon (manufactured by Alfa Aeser), Hentriacontan-16-on (manufactured by Alfa Aeser), and Kao Wax T1 (manufactured by Kao Corporation). The ink may contain only one type of aliphatic ketone compound or may contain two or more types of aliphatic ketone compounds as the gelling agent.

Meanwhile, in the general formula (G2), the alkyl groups represented by R3 and R4 are not particularly limited, but are preferably alkyl groups having 12 or more and 26 or less carbon atoms and not containing a branched chain.

Examples of the aliphatic ester compound represented by the general formula (G2) include behenyl behenate (C21-C22), icosanoic acid icosyl (C19-C20), stearyl stearate (C17-C18), palmityl stearate (C17-C16), lauryl stearate (C17-C12), behenyl stearate (C17-C22), cetyl palmitate (C15-C16), stearyl palmitate (C15-C18), myristyl myristate (C13-C14), cetyl myristate (C13-C16), octyldodecyl myristate (C13-C20), stearyl oleate (C17-C18), stearyl erucate (C21-C18), stearyl linoleate (C17-C18), behenyl oleate (C18-C22), myricyl cerotenate (C25-C16), stearyl montanate (C27-C18), behenyl montanate (C27-C22), arachidyl linoleate (C17-C20), and palmityl triacontanoate (C29-C16).

Examples of commercially available products of the aliphatic ester compound represented by the general formula (G2) include UNISTER M-2222SL (manufactured by NOF Corporation), EXCEPARL SS (manufactured by Kao Corporation), EMALEX CC-18 (manufactured by Nihon Emulsion Co., Ltd), AMREPS PC (manufactured by Kokyu Alcohol Kogyo Co., Ltd.), EXCEPARL MY-M (manufactured by Kao Corporation), SPERMACETI (manufactured by NOF Corporation), EMALEX CC-10 (manufactured by Nihon Emulsion Co., Ltd), and WE (manufactured by NOF Corporation). These commercially available products are often mixtures of two or more types, and therefore, may be separated and purified, as necessary. Furthermore, the ink may contain, as a gelling agent, only one type of aliphatic ester compound, or two or more types of aliphatic ester compounds.

The content of the gelling agent in the ink is preferably 0.5% by mass or more and 10% by mass or less, more preferably 1% by mass or more and 5% by mass or less relative to the total mass of the ink.

### [Pigment]

The pigment includes at least a compound having a structure represented by the following general formula (P) or (Q). However, a compound having a structure other than these may be contained within a range not impairing the purpose and effect of the present embodiment. Note that a compound having a structure represented by the following general formula (P) or (Q) exhibits yellow color. The ink may contain only one type of pigment or two or more types of pigments.

The general formula (P) is shown below.

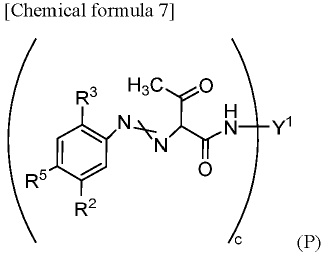

R² and R³ each independently represent an atom or a monovalent group selected from the group consisting of a hydrogen atom, a halogen atom, a hydroxy group, a nitro group, a substituted or unsubstituted alkyl group, a substituted or unsubstituted alkoxy group, a carbonyl group, a carboxy group, and combinations thereof. Examples of the halogen atom include a chlorine atom and a fluorine atom.

The alkyl group preferably has 1 or more and 12 or less carbon atoms, and examples thereof include a methyl group, an ethyl group, a propyl group, a hexyl group, and a nonyl group. The number of carbon atoms of the alkyl group is more preferably 1 or more and 6 or less, and a methyl group is particularly preferable.

The alkoxy group preferably has 1 or more and 12 or less carbon atoms, and examples thereof include a methoxy group, an ethoxy group, a propoxy group, a hexyloxy group and a nonyloxy group. The number of carbon atoms of the alkoxy group is more preferably 1 or more and 6 or less, and a methoxy group is more preferable.

Examples of the substituent bonded to the alkyl group or the alkoxy group include a halogen atom, a hydroxy group, a substituted or unsubstituted aryl group and the like.

Among the above, it is preferable that R² and R³ are each independently represent a hydrogen atom, a methyl group, a methoxy group, or CH3-O-C(=O)-.

R⁵ represents an atom or a monovalent group selected from the group consisting of a hydrogen atom, a halogen atom, a hydroxy group, a nitro group, a substituted or unsubstituted alkyl group, a substituted or unsubstituted alkoxy group, a carbonyl group, a carboxy group, and combinations thereof. Specific examples of the halogen atom, the alkyl group, the alkoxy group, and the substituent are the same as the specific examples described above for R² and R³. R⁵ is preferably a hydrogen atom, a nitro group, or a substituted or unsubstituted alkyl group among the above.

Y¹ represents a c-valent group (group with c valence) selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, an ether bond, and combinations thereof. Note that the term "aliphatic" as used herein includes not only linear or branched hydrocarbon groups but also alicyclic hydrocarbon groups. Here, c represents an integer of 1 or 2. That is, when c is 1, Y¹ is a monovalent group, and when c is 2, Y¹ is a divalent group. When c is 2, the two structures bonded to Y¹ may be the same or different.

Examples of the saturated aliphatic hydrocarbon group which may be the Y¹ include a linear saturated hydrocarbon having 1 or more and 18 or less carbon atoms, a branched saturated hydrocarbon having 3 or more and 18 or less carbon atoms, and an alicyclic saturated hydrocarbon having 3 or more and 14 or less carbon atoms. Furthermore, examples of the unsaturated aliphatic hydrocarbon group include a linear unsaturated hydrocarbon having 1 or more and 18 or less carbon atoms, a branched unsaturated hydrocarbon having 3 or more and 18 or less carbon atoms, and an alicyclic unsaturated hydrocarbon having 3 or more and 14 or less carbon atoms. Further, an ether bond (-O-) may be bonded to these aliphatic hydrocarbon groups. Specific examples of Y¹ containing an aliphatic hydrocarbon group include a nonyl group and a methoxy group. Furthermore, examples of the substituent which may be bonded thereto include a halogen atom, a hydroxy group, an alkoxy group and the like.

On the other hand, examples of the aromatic hydrocarbon which may be the above-described Y¹ include a phenyl group, a phenylene group, a biphenyl group, a biphenylene group, a naphthalene group, an azulene group and the like. Examples of the heterocyclic group include a furan group, a thiophene group and a pyrrole group. Examples of the substituent which can be bonded to these include a halogen atom (e.g., a chlorine atom and a fluorine atom), a hydroxy group, an alkyl group having 1 or more and 12 or less carbon atoms (e.g., a methyl group), an alkoxy group having 1 or more and 12 or less carbon atoms (e.g., a methoxy group), and a hexyloxy group.

Among these, Y¹ is preferably a substituted or unsubstituted phenyl group, phenylene group or biphenylene group.

The compound represented by the general formula (P) is more preferably a compound represented by the following general formula (P1).

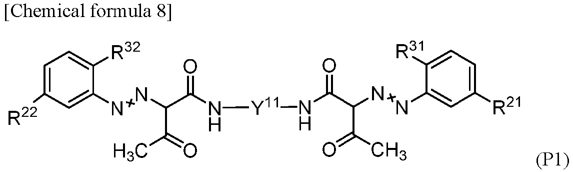

R²¹, R²², R³¹, and R³² each independently represent an atom or group selected from the group consisting of a hydrogen atom, a halogen atom, a hydroxy group, a substituted or unsubstituted alkyl group, a substituted or unsubstituted alkoxy group, a carbonyl group, a carboxy group, and combinations thereof. These are the same as R¹ and R² in the general formula (P) described above.

Y¹¹ represents a substituted or unsubstituted alkylene group, or a substituted or unsubstituted arylene group. Specific examples of the alkylene group, the arylene group, and substituents bonded thereto are the same as the groups described in the Y¹ in the general formula (P).

General formula (Q) is shown below.

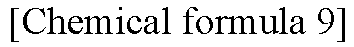

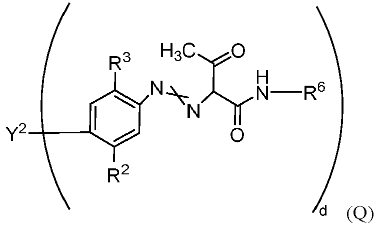

R² and R³ each independently represent an atom or a monovalent group selected from the group consisting of a hydrogen atom, a halogen atom, a hydroxy group, a nitro group, a substituted or unsubstituted alkyl group, a substituted or unsubstituted alkoxy group, a carbonyl group, a carboxy group, and combinations thereof. Specific examples of the halogen atoms, the alkyl groups, the alkoxy groups, and the substituents are the same as specific examples of the R² and the R³ in the general formula (P). Among these, it is preferable that R² and R³ each independently represent a hydrogen atom, a chlorine atom, a methyl group, a methoxy group, or CH3-O-C(=O)-.

R⁶ represents a monovalent group selected from the group consisting of a hydrogen atom, a substituted or unsubstituted alkyl group, a substituted or unsubstituted aryl group, and combinations thereof. In a case where R⁶ is an alkyl group, the number of carbon atoms thereof is preferably 1 or more and 18 or less, and more preferably 1 or more and 6 or less. It is particularly preferable that R⁶ is an aryl group. Examples of the substituent which may be bonded thereto include a halogen atom (e.g., a chlorine atom, a fluorine atom, etc), a hydroxy group, an alkyl group having 1 or more and 12 or less carbon atoms (e.g., a methyl group), a substituted or unsubstituted alkoxy group, a carbonyl group, a carboxy group, and the like.

Y² represents a d-valent group (group with d valence) selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, an ether bond, and combinations thereof. Here, d represents an integer of 1 or 2. That is, when d is 1, Y² is a monovalent group, and when d is 2, Y² is a divalent group. When d is 2, the two structures bonded to Y² may be the same or different. Specific examples of the saturated aliphatic hydrocarbon group, unsaturated aliphatic hydrocarbon group, aromatic hydrocarbon group, heterocyclic group, and substituents that can be bonded to these groups, which may be Y², are the same as the specific examples of Y¹ in the above general formula (P). Y² Among these, a substituted or unsubstituted phenyl group, phenylene group or biphenylene group is preferred.

Specific examples of the compound represented by the above general formula (P) or (Q) include the following compounds. However, the present invention is not limited thereto. Note that stereoisomers of the following compounds are also included in the preferable ones.

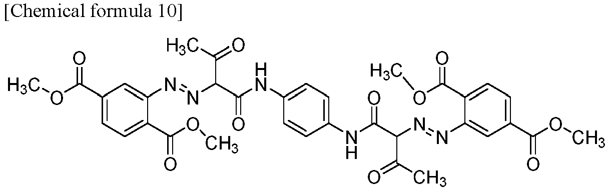

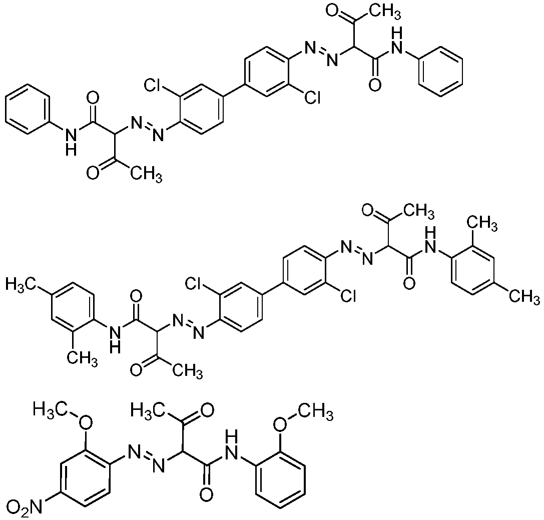

Among the above-described compounds, a compound represented by the following formula is particularly preferable.

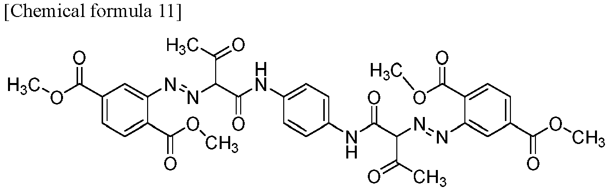

The average particle diameter of the pigment in the ink is preferably 0.08 µm or more and 0.5 µm or less, and the maximum particle diameter of the pigment is preferably 0.3 µm or more and 10 µm or less, more preferably 0.3 µm or more and 3 µm or less. By adjusting the particle diameter of the pigment, clogging of the nozzles of the inkjet recording head can be suppressed, and the storage stability of the ink, the ink transparency, and the curing sensitivity can be maintained. The average particle diameter of the pigments is measured by a dynamic light scattering method (for example, Zetasizer Nano S (manufactured by Malvern Panalytical Ltd.).

The content of the pigment is preferably 0.1% by mass or more and 20% by mass or less, more preferably 0.4% by mass or more and 10% by mass or less relative to the total mass of the ink.

The method of dispersing the pigment in the other components in the ink is not particularly limited, and the dispersion can be performed using, for example, a ball mill, a sand mill, an attritor, a roll mill, an agitator, a Henschel mixer, a colloid mill, an ultrasonic homogenizer, a pearl mill, a wet jet mill, or a paint shaker. The pigment is preferably dispersed so that the average particle diameter of the pigment particles is preferably 0.08 µm or more and 0.5 µm or less, and the maximum particle diameter is preferably 0.3 µm or more and 10 µm or less, and more preferably 0.3 µm or more and 3 µm or less. The method for dispersing the pigment is adjusted according to the types of the pigment, the pigment-dispersing agent, and the dispersion aid, the dispersion conditions, the filtration conditions, and the like.

Note that when the pigment is dispersed in other components, a dispersion medium may be used. A solvent may be used as the dispersion medium. However, in order to suppress the solvent from remaining in the obtained image, it is preferable to use the above-described photopolymerizable compound (particularly, a monomer having a low viscosity, for example, tripropylene glycol diacrylate) as the dispersion medium.

### [Dispersion Aid]

In the present specification, the dispersion aid refers to a compound having a site (in the present embodiment, the above-described common structure) adsorbing to the surface of the pigment and a site (in the present embodiment, an acidic group) adsorbing to the pigment-dispersing agent. The dispersion aid in the ink can increase the affinity between the pigment and the pigment-dispersing agent and suppresses dissociation of the pigment and the pigment-dispersing agent. The ink may contain only one type of dispersion aid, or may contain two or more types.

The dispersion aid contains a compound represented by the following general formula (S).

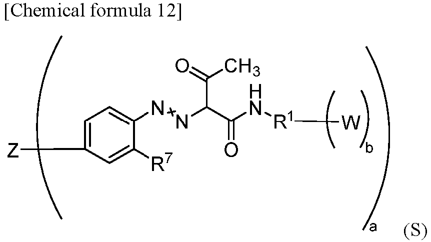

R⁷ represents an atom or a group selected from the group consisting of a hydrogen atom, a halogen atom, a hydroxy group, a substituted or unsubstituted alkyl group, a substituted or unsubstituted alkoxy group, and a carboxy group. Examples of the halogen atom include a chlorine atom and a fluorine atom.

The alkyl group preferably has 1 or more and 18 or less carbon atoms, and examples thereof include a methyl group, an ethyl group, a propyl group, a hexyl group and a nonyl group. The number of carbon atoms of the alkyl group is more preferably 1 or more and 9 or less, and a methyl group is particularly preferable.

The alkoxy group preferably has 1 or more and 18 or less carbon atoms, and examples thereof include a methoxy group, an ethoxy group, a propoxy group, a hexyloxy group, and a nonyloxy group. The number of carbon atoms of the alkoxy group is more preferably 1 or more and 9 or less, and a methoxy group is more preferable.

Examples of the substituent which can be bonded to the alkyl group or the alkoxy group include a halogen atom, a hydroxy group, a substituted or unsubstituted alkyl group, and a substituted or unsubstituted alkoxy group. R⁷ is preferably a hydrogen atom or an alkyl group (methyl group) having 1 or more and 18 or less carbon atoms.

R¹ represents a monovalent or divalent group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, a carboxy group, an ether bond, and combinations thereof. The term "aliphatic" as used herein includes not only linear or branched hydrocarbon groups but also alicyclic hydrocarbon groups. Here, b is 0 or 1, and when b is 0, R¹ is a monovalent group, and when b is 1, R¹ is a divalent group.

Examples of the saturated aliphatic hydrocarbon group which may be the above-described R¹ include a linear saturated hydrocarbon having 1 or more and 18 or less carbon atoms, a branched saturated hydrocarbon having 3 or more and 18 or less carbon atoms, and an alicyclic saturated hydrocarbon having 3 or more and 14 or less carbon atoms. Furthermore, examples of the unsaturated aliphatic hydrocarbon group include a linear unsaturated hydrocarbon having 1 or more and 18 or less carbon atoms, a branched unsaturated hydrocarbon having 3 or more and 18 or less carbon atoms, and an alicyclic unsaturated hydrocarbon having 3 or more and 14 or less carbon atoms. Further, an ether bond (-O-) may be bonded to these aliphatic hydrocarbon groups. Examples of R¹ containing an aliphatic hydrocarbon group include a nonyl group and a methoxy group. Furthermore, examples of the substituent which may be bonded thereto include a halogen atom, a hydroxy group, an alkoxy group and the like.

Examples of the unsaturated aromatic hydrocarbon which may be the above-described R¹ include a phenyl group, a phenylene group, a biphenyl group, a biphenylene group, a naphthalene ring and the like. Examples of the heterocycle include a furan group, a thiophene group, and a pyrrole group. Examples of the substituent which can be bonded to them include a halogen atom (e.g., a chlorine atom, a fluorine atom, etc), a hydroxy group, an alkyl group having 1 or more and 12 or less carbon atoms (e.g., a methyl group), an alkoxy group having 1 or more and 12 or less carbon atoms (e.g., a methoxy group), a hexyloxy group, and the like.

When R¹ is monovalent, R¹ is preferably a substituted or unsubstituted phenyl or naphthyl group. When R¹ is divalent, the R¹ is preferably a substituted or unsubstituted phenylene or naphthylene group.

W represents an acidic group selected from phosphate group, sulfonic acid group, sulfonate group (-SO₃M), and a nitrate group; a represents 1 or 2, and when a is 1, b is 1, and when a is 2, at least one b is 1. In the sulfonate group, the sulfonate ion (-SO₃-) and the counter ion (M⁺) form a salt. Examples of the counter ion (M⁺) of the sulfonate ion include Li ion, Na ion, K ion, ammonium ion, N⁺H(CH₃)₃, N⁺(CH₃)₂{(CH₂)nCH₃}₂ (n is an integer of 1 or more and 20 or less), and the like.

Z represents an a-valent atom or group (i.e., atom or group with a valence) selected from the group consisting of a single bond, a hydrogen atom, a halogen atom, a hydroxy group, an amino group, a substituted or unsubstituted alkoxy group, a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, and combinations thereof. That is, when a is 1, Z is a monovalent group, and when a is 2, Z is a divalent group. Examples of the halogen atom, the alkoxy group, the saturated aliphatic hydrocarbon group, the unsaturated aliphatic hydrocarbon group, the aromatic hydrocarbon group, the heterocyclic group, and substituents bonded thereto, which may be Z, include those described above as the R⁷ or the R¹.

When Z is a monovalent group, Z is preferably a hydrogen atom, an alkyl group having 1 or more and 18 or less carbon atoms (e.g., a methyl group), an alkoxy group having 1 or more and 18 or less carbon atoms, or a substituted or unsubstituted aromatic hydrocarbon group. When Z is a divalent group, it is preferably a single bond or a phenylene group.

The compound represented by the above general formula (S) is more preferably a compound represented by the following general formula (S1). 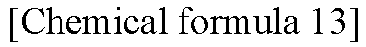 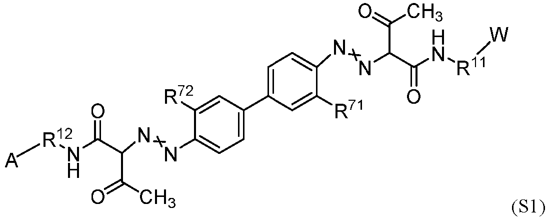 R⁷¹ and R⁷² each independently represent an atom or a group selected from the group consisting of a hydrogen atom, a halogen atom, a hydroxy group, a substituted or unsubstituted alkyl group, a substituted or unsubstituted alkoxy group, and a carboxy group. These are the same as those described above as the R¹.

R¹¹ And R¹² each independently represent a group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, a carboxy group, and combinations thereof, and are the same as those described above as the R¹. W represents an acidic group selected from a phosphate group, a sulfonic acid group, a sulfonate group, and a nitrate group. Further, A represents an acidic group selected from a hydrogen atom, a phosphate group, a sulfonic acid group, a sulfonate group, and a nitrate group.

Specific examples of the dispersion aid represented by the general formula (S) include compounds represented by the following chemical formulae. Note that stereoisomers of the following compounds are also included in the preferable ones.

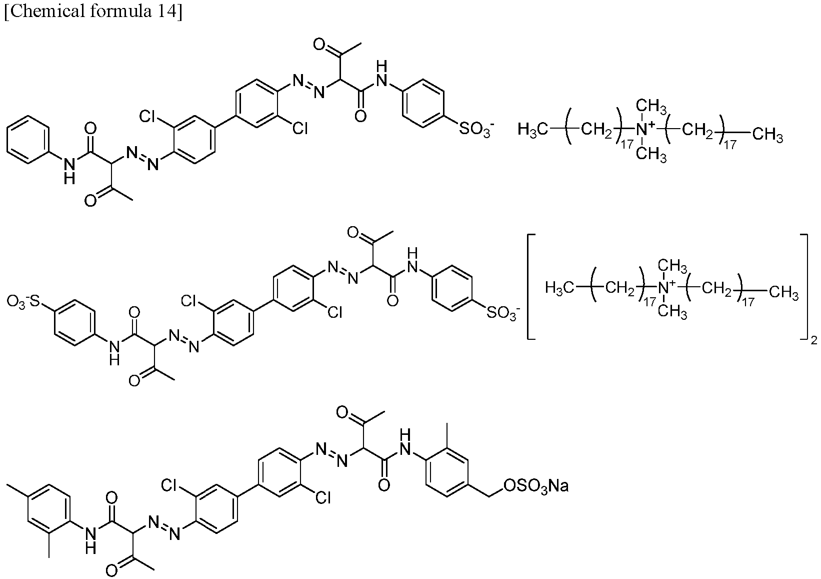

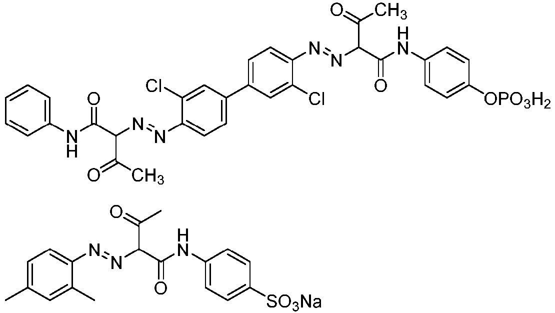

The content of the dispersion aid in the ink is preferably 0.01% by mass or more and 2% by mass or less, more preferably 0.02% by mass or more and 1% by mass or less relative to the total mass of the ink.

### [Pigment-dispersing Agent]

The pigment-dispersing agent is a component for enhancing the dispersibility of the pigment and the ejection stability of the ink, and preferably has a moiety capable of bonding to the above-described dispersion aid (acidic group).

Examples of the pigment-dispersing agent include hydroxyl group-containing carboxylic acid esters, salts of a long-chain polyaminoamide and a high-molecular-weight acid ester, salts of a high-molecular-weight polycarboxylic acid, salts of a long-chain polyaminoamide and a polar acid ester, high-molecular-weight unsaturated acid esters, high-molecular-weight copolymers such as acrylic block copolymers, modified polyurethanes, modified polyacrylates, polyether ester-type anionic surfactants, naphthalenesulfonic acid-formalin condensate salts, aromatic sulfonic acid-formalin condensate salts, polyoxyethylene alkyl phosphate esters, polyoxyethylene nonylphenyl ether, and stearylamine acetate.

A preferred pigment-dispersing agent is selected according to the type of the above-described dispersion aid, and may be a pigment-dispersing agent having acidity (acidic pigment-dispersing agent) or a pigment-dispersing agent having basicity (basic pigment-dispersing agent). Among these, a pigment-dispersing agent having basicity is preferable.

The basic pigment-dispersing agent is, for example, a polymer pigment-dispersing agent containing one or more of a primary amine and a secondary amine. Examples of the basic pigment-dispersing agent include Solsperse 11200, Solsperse 13240, Solsperse 13650, Solsperse 13940, Solsperse 16000, Solsperse 17000, Solsperse 18000, Solsperse 20000, Solsperse 24000SG, Solsperse 24000GR, Solsperse 28000, Solsperse 31845, Solsperse 32000, Solsperse 32500, Solsperse 32550, Solsperse 32600, Solsperse 33000, Solsperse 34750, Solsperse 35100, Solsperse 35200, Solsperse 37500, Solsperse 38500, Solsperse 39000, Solsperse 56000, Solsperse 71000, Solsperse 76500, Solsperse 88000, Solsperse X300, and Solsperse 9000 manufactured by Lubrizol Corporation; DISPERBYK-108, DISPERBYK-109, DISPERBYK-112, DISPERBYK-116, DISPERBYK-130, DISPERBYK-161, DISPERBYK-162, DISPERBYK-163, DISPERBYK-164, DISPERBYK-166, DISPERBYK-167, DISPERBYK-168, DISPERBYK-182, DISPERBYK-183, DISPERBYK-184, DISPERBYK-185, DISPERBYK-2000, DISPERBYK-2008, DISPERBYK-2009, DISPERBYK-2022, DISPERBYK-2050, DISPERBYK-2150, DISPERBYK-2155, DISPERBYK-2163, DISPERBYK-2164, and BYK-9077 manufactured by Byk-Chemie GmbH; Ajisper PB821, PB822, PB823, PB824, and PB827 manufactured by Ajinomoto Fine-Techno Co., Inc.; and EFKA 4300, EFKA 4330, EFKA 4340, EFKA 4400, EFKA PX 4701, EFKA 4585, EFKA 5207, EFKA 6230, and EFKA 7731 manufactured by Basf SE.

Among the above basic pigment-dispersing agents, polyester-based basic dispersants are particularly preferable from the viewpoint of the ejection stability of the ink. Examples of the polyester-based basic dispersants include Solsperse 13940, 17000, 24000, and 32000 manufactured by Lubrizol Corporation; and Ajisper PB821, PB822, PB823, PB824, and PB827 manufactured by Ajinomoto Fine - Techno Co., Inc. Furthermore, acrylic block copolymer-based basic pigment-dispersing agents such as EFKA PX 4701 manufactured by Basf SE are also preferable.

Examples of acidic pigment-dispersing agents include Solsperse 3000, Solsperse 21000, Solsperse 26000, Solsperse 36600, Solsperse 41000, Solsperse 41090, Solsperse 43000, Solsperse 44000, Solsperse 46000, Solsperse 47000, and Solsperse 55000 manufactured by Lubrizol Corporation; and DISPERBYK-102, DISPERBYK-111, DISPERBYK-170, DISPERBYK-171, DISPERBYK-174, DISPERBYK-2096, BYK-P104, BYK-P104S, BYK-P105, and BYK-220S manufactured by BYK Japan K. K.

The ink may contain only one type of pigment-dispersing agent or two or more types of pigment-dispersing agents. The amount of the pigment-dispersing agent in the ink is preferably 0.1% by mass or more and 10% by mass or less relative to the total mass of the ink.

### [Other Components]

The ink may further contain a photoinitiator aid, a polymerization inhibitor, and the like, as necessary, in addition to the above-described components. Examples of the photoinitiator aid include tertiary amine compounds. Among these, aromatic tertiary amine compounds are preferable. Examples of the aromatic tertiary amine compound include N,N-dimethylaniline, N,N-diethylaniline, N,N-dimethyl-p-toluidine, N,N-dimethylamino-p-benzoic acid ethyl ester, N,N-dimethylamino-p-benzoic acid isoamylethyl ester, N,N-dihydroxyethylaniline, triethylamine, and N,N-dimethylhexylamine. Among these, N,N-dimethylamino-p-benzoic acid ethyl ester and N,N-dimethylamino-p-benzoic acid isoamylethyl ester are preferable. The ink may contain only one type of photoinitiator aid, or may contain two or more types.

Examples of the polymerization inhibitor include (alkyl) phenols, hydroquinones, catechols, resorcinols, p-methoxyphenol, t-butylcatechol, t-butylhydroquinone, pyrogallol, 1,1-picrylhydrazyl, phenothiazine, p-benzoquinone, nitrosobenzene, 2,5-di- t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene) anilineoxide, dibutylcresol, cyclohexanoneoximecresol, guaiacol, o-isopropylphenol, butyraldoxime, methylethylketoxime, cyclohexanoneoxime and the like.

The ink may further contain other components, as necessary. The other components may be various additives, other resins, and the like. Examples of the additive include a surfactant, a leveling additive, a matting agent, an ultraviolet absorber, an infrared absorber, an antibacterial agent, and a basic compound for enhancing the storage stability of the ink. Examples of the basic compound include basic alkali metal compounds, basic alkaline earth metal compounds, and basic organic compounds such as amines. Examples of the other resin include a resin for adjusting physical properties of a cured product, and the like, and include, for example, a polyester-based resin, a polyurethane-based resin, a vinyl-based resin, an acrylic-based resin, a rubber-based resin, and the like.

### [Physical Properties of Inkjet Ink]

Since the above-described ink contains the gelling agent as described above, the ink reversibly undergoes sol-gel phase transition depending on the temperature. The actinic radiation-curable ink which undergoes sol-gel phase transition is a liquid (sol) at a high temperature (for example, about 80°C), and thus can be discharged in a sol state from an inkjet recording head. When an actinic radiation-curable inkjet ink is ejected at high temperature, an ink droplet (dot) lands on a recording medium and then is naturally cooled to gel. Thus, coalescence of adjacent dots can be suppressed and image quality can be improved.

In order to enhance the ejection property of ink droplets, the ink preferably has an ink viscosity at high temperature of a certain level or lower. To be specific, the viscosity of the ink at 80°C is preferably 3 mPa·s or more and 20 mPa·s or less. On the other hand, in order to suppress coalescence of adjacent dots, the viscosity of the ink at room temperature after landing is preferably a certain level or more. To be specific, the viscosity of the ink at 25°C is 1000 mPa·s or more.

The gelation temperature of the ink is preferably 30°C or more and less than 100°C, more preferably 50°C or more and 65°C or less. When the gelation temperature of the ink is too high, gelation tends to occur at the time of ejection, so that the ejection property tends to be low. On the other hand, when the gelation temperature of the ink is excessively low, the ink is less likely to be rapidly gelled after landing on a recording medium. Note that the gelation temperature is a temperature at which the ink in a sol state is gelled and its fluidity decreases in a process of cooling the ink.

The viscosity at 80°C, the viscosity at 25°C, and the gelation temperature of the inkjet ink can be determined by measuring a temperature change in the dynamic viscoelasticity of the ink with a rheometer. Specifically, a temperature change curve of viscosity is obtained when the ink is heated to 100°C and cooled to 20°C under conditions of a shear rate of 11.7 (/s) and a temperature lowering rate of 0.1 °C/s. The viscosity at 80°C and the viscosity at 25°C are the viscosities at 80°C and 25°C in the temperature change curve. The gelation temperature is defined as a temperature at which the viscosity becomes 200 mPa·s in a temperature change curve of viscosity.

As the rheometry, stress control rheometry PhysicaMCR series manufactured by Anton Paar can be used. The cone plate may have a diameter of 75 mm and a cone angle of 1.0°.

The above-described ink having a sol-gel phase transition can suppress coalescence of liquid droplets by ejecting ink droplets that are in a liquid state at a high temperature, landing the ink droplets on a recording medium, and at the same time, cooling and gelling the ink droplets. Thus, a high-definition image can be formed even when high-speed recording is performed.

### [Method for Preparing Inkjet Ink]

The ink is obtained by mixing the photopolymerizable compound, the pigment, the pigment-dispersing agent, the gelling agent, the photoinitiator, and the dispersion aid under heating. The mixing method is not particularly limited, but for example, it is preferable to prepare a composition in which a pigment, a pigment-dispersing agent, a dispersion aid, and the like are dispersed in a part of the photopolymerizable compound and to mix the composition with other components. The obtained ink is preferably filtered with a predetermined filter.

### 2. Method for Producing Printed Product

The method for producing a printed product according to the present embodiment includes at least the following two steps.
(1) Ejecting ink droplets of the ink from an inkjet recording head to cause the ink droplets to land on a recording medium
(2) Irradiating the ink droplets having landed on the recording medium with active rays to cure the ink droplets

### [Step (1)]

In this step, ink droplets of the above-described ink are ejected from an inkjet recording head and allowed to land on a recording medium at positions corresponding to an image to be formed.

The ejection method from the inkjet recording head may be either an on-demand method or a continuous method. The inkjet head of the on-demand system may be any of an electro-mechanical conversion system such as a single cavity type, a double cavity type, a bender type, a piston type, a share mode type, and a shared wall type, and an electro-thermal conversion system such as a thermal inkjet type and a bubble jet (Bubble Jet is a registered trademark of Canon Inc) type.

By ejecting the ink droplets from the inkjet head in a heated state, the ejection stability can be enhanced. The temperature of the ink at the time of ejection is preferably 35°C or more and 100°C or less, and for further enhancing the ejection stability, more preferably 35°C or more and 80°C or less. In particular, it is preferable to perform ejection at an ink temperature at which the viscosity of the ink becomes 7 mPa·s or more and 15 mPa·s or less, and more preferably 8 mPa·s or more and 13 mPa·s or less.

The ink is heated by an inkjet recording head of the inkjet recording apparatus, an ink channel connected to the inkjet recording head, an ink tank connected to the ink channel, or the like.

The amount of one droplet discharged from each nozzle of the inkjet recording head depends on the image resolution, but is preferably 0.5 pl or more and 10 pl or less, and more preferably 0.5 pl or more and 2.5 pl or less in order to form a high-definition image.

It is preferable that the ink droplets landed on the recording medium undergo a sol-gel phase transition by cooling and quickly gel. Thus, the ink droplet can be pinned without being diffused. Furthermore, since oxygen is less likely to enter the ink droplet, curing of the photopolymerizable compound is less likely to be inhibited by oxygen.

The recording medium may be either paper or a resin film. Examples of the paper include coated printing paper and coated printing paper B. In addition, examples of the resin film include a polyethylene terephthalate film, a polypropylene film, and a vinyl chloride film.

The conveyance speed of the recording medium is preferably 30 to 120 m/min.

### [Step (2)]

The ink droplets landed on the recording medium are irradiated with active rays to polymerize the photopolymerizable compound contained in the ink droplets, thereby curing the ink droplets.

The active ray can be selected from, for example, electron beams, ultraviolet rays, α-rays, γ-rays, X-rays, and the like. Among these, ultraviolet rays are preferable, and an LED light source that emits light having peak wavelengths in the range of 360 nm to 410 nm is more preferable. An example of the LED light source includes a water-cooled LED (peak wavelength 395 nm) manufactured by Phoseon Technology, Inc. An LED emits less radiant heat than a conventional light source (e.g., a metal halide lamp). Therefore, upon irradiation with active rays, the ink is hardly dissolved, and gloss unevenness and the like are hardly caused.

In the case of irradiation with light having a peak wavelength in the range of 360 nm to 410 nm, the peak irradiance at the surface of a recording medium or the surface of the ink droplets is preferably 0.5 W/cm² to 10.0 W/cm². The peak illuminance is more preferably equal to or higher than 1.0 W/cm² and equal to or lower than 5.0 W/cm².

The irradiation with active rays is preferably performed between 0.001 seconds and 1.0 seconds after the ink lands on the recording medium. In order to form a high-definition image, it is more preferable to perform the exposure for 0.001 seconds to 0.5 seconds.

On the other hand, the irradiation with active rays may be performed in two stages. In this case, it is possible to pre-cure the ink by irradiating the ink with active rays between 0.001 seconds and 2.0 seconds after the ink has landed on the recording medium, and to main-cure the ink by further irradiating the ink with active rays after completion of all printing. When the irradiation with active rays is divided into two stages, the curing shrinkage of the ink hardly occurs.

### Examples

Hereinafter, the present invention will be specifically described with reference to examples, but the embodiments of the present invention are not limited to these examples.

### (1) Preparation of Pigment Dispersion Liquid 1

### (1-1) Preparation of Material

As materials of a pigment dispersion liquid, the following photopolymerizable compound, pigment-dispersing agent, pigment, and dispersion aid were prepared.

### [Photopolymerizable Compound]

### Tripropylene glycol diacrylate (M220, manufactured by Toagosei Co., Ltd)

### [Pigment-dispersing Agent]

Acrylic block copolymer (Basf SE, EFKA PX 4701)

### [Pigment]

### - Pigment 1

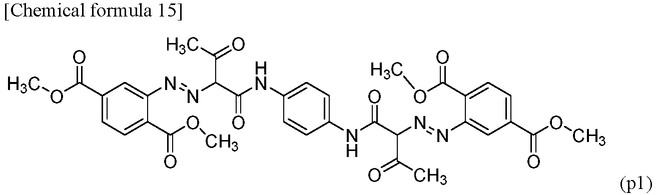

### - Pigment 2

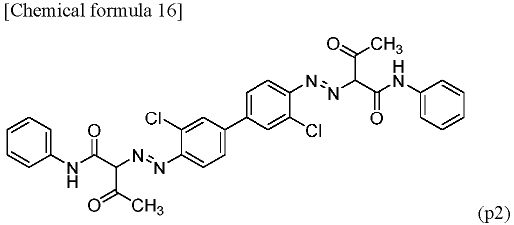

### - Pigment 3

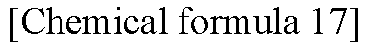

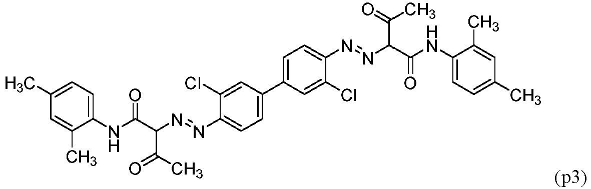

### - Pigment 4

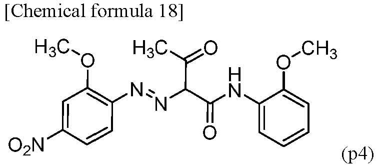

### - Pigment 5

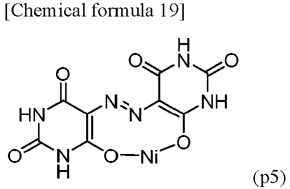

### [Dispersion Aid]

### - Dispersion aid 1

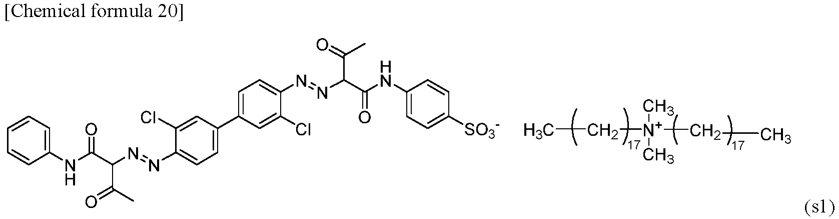

### - Dispersion aid 2

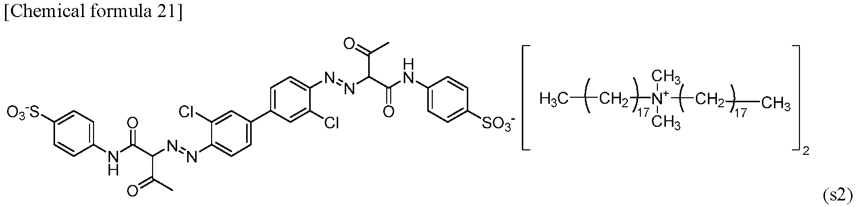

### - Dispersion aid 3

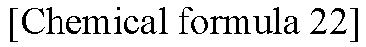

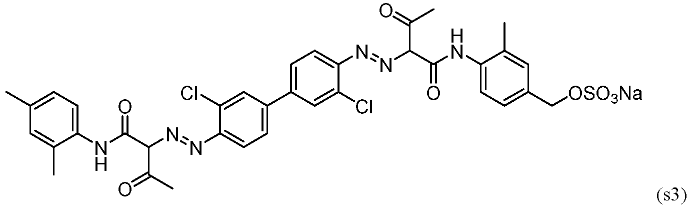

### - Dispersion aid 4

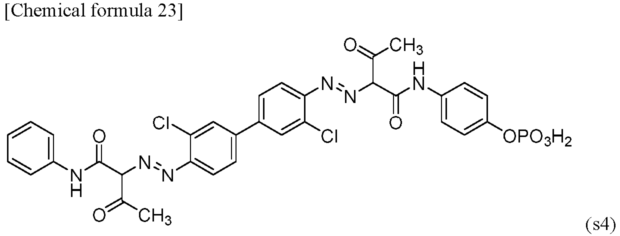

### - Dispersion aid 5

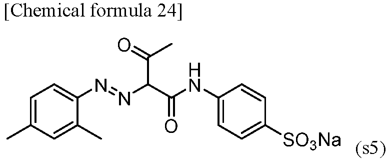

### - Dispersion aid 6

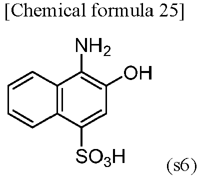

### (1-2) Preparation of Pigment Dispersion Liquid

### Preparation of Pigment Dispersion Liquid 1

A stainless steel beaker was charged with 3.0 parts by mass of the pigment-dispersing agent, 35.7 parts by mass of the photopolymerizable compound, and 0.3 parts by mass of a dispersion aid (dispersion aid 1). Then, the mixture was stirred for 1 hour while being heated on a hot plate at 65°C. The obtained solution was cooled to room temperature, and then, 6.0 parts by mass of the black pigment (black pigment 1) was added to the mixture, which was then placed in a glass bottle together with 200 g zirconia beads having a diameter of 0.5 mm, sealed, and subjected to dispersion treatment for 8 hours with a paint shaker. Thereafter, the zirconia beads were removed to prepare a pigment dispersion liquid 1.

### Preparation of Pigment Dispersion Liquids 2 to 23

A pigment dispersion liquid was prepared in the same manner as the pigment dispersion liquid 1 except that the combination of the dispersion aid and the pigment was changed as shown in Table 1.

**Table 1**

| | Photopolymerizable compound | | Pigment-dispersing agent | | Dispersion aid | | Pigment | |
|---|---|---|---|---|---|---|---|---|
| | Type | Amount (parts by mass) | Type | Amount (parts by mass) | Type | Amount (parts by mass) | Type | Amount (parts by mass) |
| Pigment dispersion liquid 1 | Tripropylene glycol diacrylate | 35.7 | Acrylic block copolymer | 3.0 | s1 | 0.3 | p1 | 6.0 |
| Pigment dispersion liquid 2 | | | | | s2 | 0.3 | p1 | 6.0 |
| Pigment dispersion liquid 3 | | | | | s3 | 0.3 | p1 | 6.0 |
| Pigment dispersion liquid 4 | | | | | s4 | 0.3 | p1 | 6.0 |
| Pigment dispersion liquid 5 | | | | | s5 | 0.3 | p1 | 6.0 |
| Pigment dispersion liquid 6 | | | | | s1 | 0.3 | p2 | 6.0 |
| Pigment dispersion liquid 7 | | | | | s2 | 0.3 | p2 | 6.0 |
| Pigment dispersion liquid 8 | | | | | s3 | 0.3 | p2 | 6.0 |
| Pigment dispersion liquid 9 | | | | | s4 | 0.3 | p2 | 6.0 |
| Pigment dispersion liquid 10 | | | | | s5 | 0.3 | p2 | 6.0 |
| Pigment dispersion liquid 11 | | | | | s1 | 0.3 | p3 | 6.0 |
| Pigment dispersion liquid 12 | | | | | s2 | 0.3 | p3 | 6.0 |
| Pigment dispersion liquid 13 | | | | | s3 | 0.3 | p3 | 6.0 |
| Pigment dispersion liquid 14 | | | | | s4 | 0.3 | p3 | 6.0 |
| Pigment dispersion liquid 15 | | | | | s5 | 0.3 | p3 | 6.0 |
| Pigment dispersion liquid 16 | | | | | s1 | 0.3 | p4 | 6.0 |
| Pigment dispersion liquid 17 | | | | | s2 | 0.3 | p4 | 6.0 |
| Pigment dispersion liquid 18 | | | | | s3 | 0.3 | p4 | 6.0 |
| Pigment dispersion liquid 19 | | | | | s4 | 0.3 | p4 | 6.0 |
| Pigment dispersion liquid 20 | | | | | s5 | 0.3 | p4 | 6.0 |
| Pigment dispersion liquid 21 | | | | | s1 | 0.3 | p5 | 6.0 |
| Pigment dispersion liquid 22 | | | | | s6 | 0.3 | p1 | 6.0 |
| Pigment dispersion liquid 23 | | | | | s6 | 0.3 | p5 | 6.0 |

### (2) Preparation of Inkjet Ink

### (2-1) Preparation of Material

The following photopolymerizable compound, the photoinitiator, the gelling agent, and the polymerization inhibitor were prepared.

### [Photopolymerizable Compound]

Tripropylene glycol diacrylate (M220, manufactured by Toagosei Co., Ltd)
Polyethylene glycol #600 diacrylate (manufactured by Daicel - Cytec, EBECRYL11)
3PO Modified trimethylolpropane triacrylate (M360, manufactured by Miwon)
6EO Modified trimethylolpropane triacrylate (M3160, manufactured by SARTOMER)
Ditrimethylolpropane tetraacrylate (SR355, manufactured by SARTOMER)
Amine-modified acrylate (CN371, manufactured by SARTOMER)

### [Photoinitiator]

### Bis(2,4,6-trimethylbenzoyl)-phenylphosphine oxide (manufactured by Basf SE, IRGACURE819)

1,3-Di({α-[1-chloro-9-oxo-9H-thioxanthen-4-yl)oxy]acetylpoly[oxy(1-methylethylene)]}oxy)-2,2-bis({α-[1-chloro-9-oxo-9H-thioxanthen-4-yl)oxy]acetylpoly[oxy(1-methylethylene)]}oxymethyl)propane (Speedcure7010, manufactured by LAMBSON).

### [Gelling agent]

Hentriacontan-16-one (dipalmityl ketone, manufactured by Arfa Aeser, a gelling agent represented by general formula (G1))
Behenyl stearate (WE11, manufactured by NOF Corporation, a gelling agent having a structure represented by the general formula (G2))

### [Surfactant]

Polyether-modified polydimethylsiloxane (BYK-307, manufactured by Basf SE)

### [Polymerization Inhibitor]

4,4'-[(1,10-dioxo-1,10-decanediyl)bis(oxy)]bis[2,2,6,6-tetramethyl]-1-piperidinyloxy (UV-10, manufactured by Basf SE).

### (2-2) Preparation of Inkjet Ink

The components listed in Table 2 below and the above-described pigment dispersion liquid were mixed, heated to 80°C, and stirred. The obtained solutions were filtered under heating using a 3 µm Teflon (registered trademark) membrane filter manufactured by ADVANTEC Corporation to obtain inkjet inks 1 to 23. Note that the unit of the components shown in Table 2 is parts by mass.

### 3. Production and Evaluation of Printed Product

### (1) Production of Printed Product

A monochrome image was formed using an inkjet recording apparatus of a line recording system. An ink supply system of the inkjet recording apparatus is configured by communication of an ink tank, a supply pipe, a sub ink tank immediately before a head, a tube with a filter, and a piezoelectric head (inkjet recording head) in this order. The inkjet ink obtained above was supplied to the ink supply system of the inkjet recording apparatus, and the entire ink supply system from the ink tank to the inkjet recording head portion was heated to 80°C.

The inkjet recording head used had 1776 nozzles, and two inkjet heads manufactured by Konica Minolta, Inc. having 600dpi resolutions were modularized as one set so as to be 1200dpi. The voltage applied was adjusted so that the amount of one droplet was 3.5 pl, and an image was formed. Here, dpi stands for the number of dots per 2.54 cm. The image formation was performed under an environment of 23°C and 55% RH.

Microflute for paper machine (F flute thickness 0.7 mm Crown Package) and coated cardboard (Maricoat, 550 g/m², Hokuetsu Paper Mills) were prepared as recording media. The temperature of the recording medium was adjusted to 30°C by the temperature controller. The conveyance speed of the recording media was 1000 mm/s. Then, ink droplets were ejected from the inkjet recording head onto the recording medium to form the image.

After the image formation, the recording medium was irradiated with active rays emitted from an LED lamp (manufactured by KYOCERA Corporation, 8 W/cm², wave length 450 nm, irradiation range 68 mm, distance from the LED lamp to the recording medium surface 50 mm, illuminance intensity 2.0 W/cm² on the recording medium) disposed at a downstream part of the inkjet recording apparatus, such that an accumulated light amount became 350 mJ. Next, the ink landed on the recording medium was cured.

### (2) Evaluation

The high-temperature stability of the inkjet ink and the weather resistance of the printed product were evaluated according to the following criteria. The results are shown in Table 2.

### High-Temperature Stability of Inkjet ink

The high-temperature stability of the inkjet ink was evaluated as follows.

The particle diameter of the particles in the inkjet ink prepared above was measured using a Zetasizer Nano S (manufactured by Malvern Panalytical Ltd.) . Furthermore, the ink was stored under an environment of 90°C for 2 weeks. Thereafter, the particle shape in the inkjet ink was measured in the same manner as described above. The change in particle diameter before and after storage was evaluated according to the following criteria.
⊚: particle diameter variation was 0 nm or more and less than 5 nm
∘: particle diameter variation was 5 nm or more and less than 10 nm
△: particle diameter variation was 10 nm or more and less than 20 nm
×: particle diameter variation was 20 nm or more

### Weather Resistance of Printed Product

The color space (L*, a*, b*) of the obtained image was evaluated for the printed product described above. Thereafter, the specimen was acceleratedly degraded under conditions of 120 W/m², spray-water irradiation, 25°C, and 169 hours with a xenon weather meter. Next, the color space (L1 *, a1*, b1*) of the image was evaluated again. These changes ΔE (= [(L1 *-L*)² + (a1 *-a*)² + (b1*-b1)²]^{1/2}) were calculated and evaluated according to the following evaluation criteria:
⊚: ΔE ≤5
o: 5 < ΔE ≤ 10
△: 10 < ΔE ≤ 15
×: 15 < ΔE

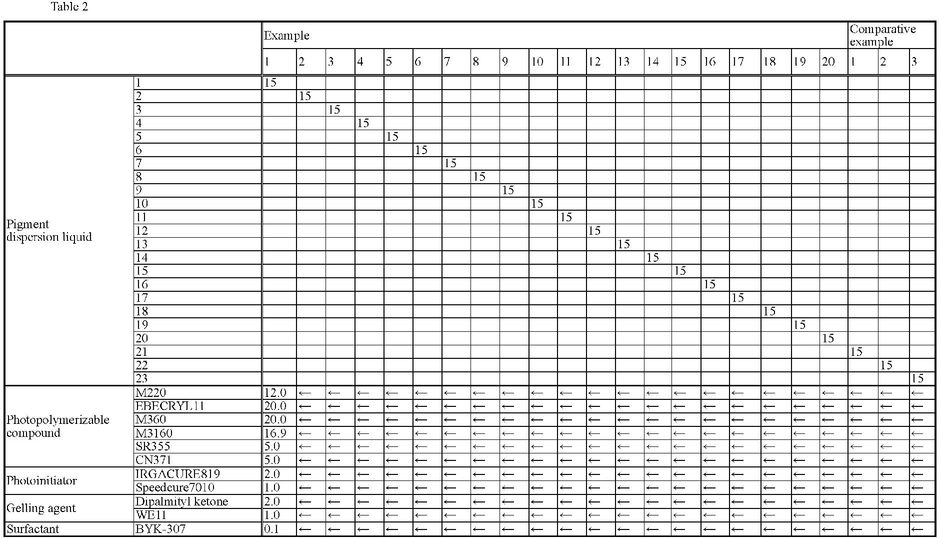

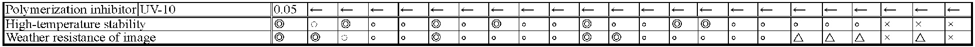

As shown in Table 2, the inkjet ink containing the dispersion aid having the structure represented by the general formula (S) and the pigment having the structure represented by the general formula (P) or the general formula (Q) had satisfactory high-temperature stability. In these, the weather resistance of the obtained image was also satisfactory (Examples 1 to 20). In contrast, in any of the cases of combining a dispersion aid having a different structure or combining a pigment having a different structure, the high-temperature stability was low, and furthermore, the weather resistance of the image was also low (Comparative Examples 1 to 3).

Although embodiments of the present invention have been described and illustrated in detail, it is clearly understood that the same is by way of illustration and example only and not limitation, the scope of the present invention should be interpreted by terms of the appended claims.

### Industrial Applicability

According to the present invention, an actinic radiation-curable inkjet ink having satisfactory dispersion stability of a pigment is provided. In addition, according to the method for producing a printed product using the actinic radiation-curable inkjet ink, the weather resistance of the obtained printed product is satisfactory. Therefore, the present invention is useful in various printing fields.

## Claims

1. An actinic radiation-curable inkjet ink, comprising a photopolymerizable compound, a photoinitiator, a gelling agent, a pigment, a dispersion aid, and a pigment-dispersing agent, wherein:
the dispersion aid contains a compound represented by a general formula (S) below: 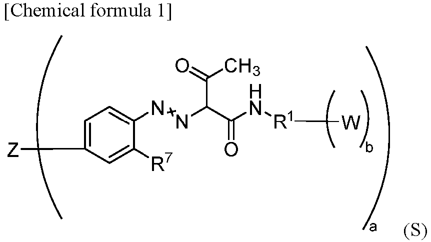 (in the general formula (S),
R⁷ represents an atom or a monovalent group selected from the group consisting of a hydrogen atom, a halogen atom, a hydroxy group, a substituted or unsubstituted alkyl group, a substituted or unsubstituted alkoxy group, and a carboxy group,
R¹ represents a monovalent or divalent group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, a carboxy group, an ether bond, and combinations thereof,
Z represents an a-valent atom or group selected from the group consisting of a single bond, a hydrogen atom, a halogen atom, a hydroxy group, an amino group, a substituted or unsubstituted alkoxy group, a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, and combinations thereof,
W represents an acidic group selected from a phosphate group, a sulfonic acid group, a sulfonate group, and a nitrate group,
a represents 1 or 2, b represents 0 or 1, and
when a is 1, b is 1, and when a is 2, at least one b is 1); and
the pigment contains a compound represented by a general formula (P) or a general formula (Q) below: 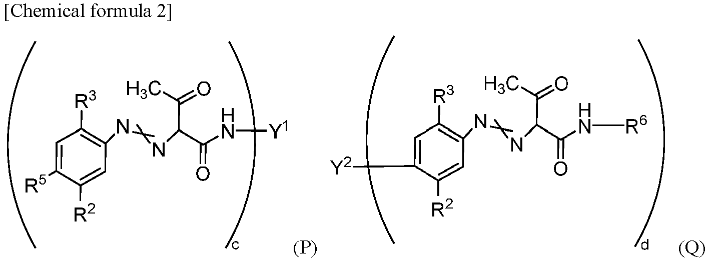 (in the general formula (P) and the general formula (Q),
R², R³, and R⁵ each independently represent an atom or a monovalent group selected from the group consisting of a hydrogen atom, a halogen atom, a hydroxy group, a nitro group, a substituted or unsubstituted alkyl group, a substituted or unsubstituted alkoxy group, a carbonyl group, a carboxy group, and combinations thereof,
R⁶ represents a monovalent group selected from the group consisting of a hydrogen atom, a substituted or unsubstituted alkyl group, a substituted or unsubstituted aryl group, and combinations thereof,
Y¹ represents a c-valent group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, an ether bond, and combinations thereof,
Y² represents a d-valent group selected from the group consisting of a single bond, a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, an ether bond, and combinations thereof, and
c and d each independently represent 1 or 2).

2. The actinic radiation-curable inkjet ink according to claim 1, wherein
the dispersion aid contains a compound represented by a general formula (S1) below: 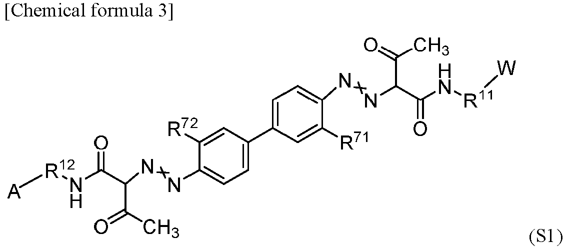 (in the general formula (S1),
R⁷¹ and R⁷² each independently represent an atom or a group selected from the group consisting of a hydrogen atom, a halogen atom, a hydroxy group, a substituted or unsubstituted alkyl group, a substituted or unsubstituted alkoxy group, and a carboxy group,
R¹¹ and R¹² each independently represent a group selected from the group consisting of a substituted or unsubstituted saturated aliphatic hydrocarbon group, a substituted or unsubstituted unsaturated aliphatic hydrocarbon group, a substituted or unsubstituted aromatic hydrocarbon group, a substituted or unsubstituted heterocyclic group, a carboxy group, an ether bond, and combinations thereof,
W represents an acidic group selected from a phosphate group, a sulfonic acid group, a sulfonate group, and a nitrate group, and
A represents an acidic group selected from a hydrogen atom, a phosphate group, a sulfonic acid group, and a nitrate group).

3. The actinic radiation-curable inkjet ink according to claim 1, wherein
the pigment contains a compound represented by a general formula (P1) below: 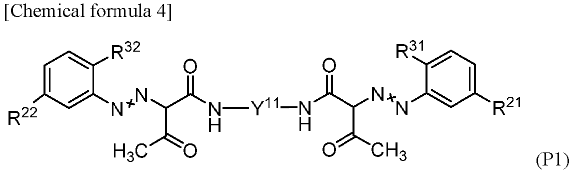 (in the general formula (P1),
Y¹¹ represents a substituted or unsubstituted alkylene group, or a substituted or unsubstituted arylene group, and
R²¹, R²², R³¹, and R³² each independently represent an atom or a monovalent group selected from the group consisting of a hydrogen atom, a halogen atom, a hydroxy group, a substituted or unsubstituted alkyl group, a substituted or unsubstituted alkoxy group, a carbonyl group, a carboxy group, and combinations thereof).

4. The actinic radiation-curable inkjet ink according to claim 3, wherein
the pigment contains a compound represented by a general formula (P2) below:

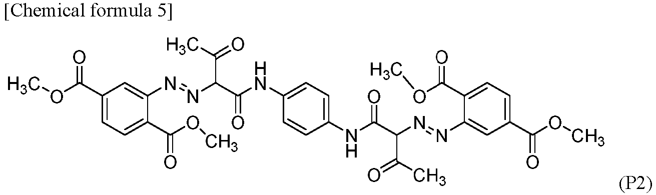

5. The actinic radiation-curable inkjet ink according to any one of claims 1 to 4, wherein the gelling agent contains at least one compound selected from compounds represented by general formulae (G1) and (G2) below:
R1-CO-R2 ... General formula (G1)
R3-COO-R4 ... General formula (G2)
(in the general formulae (G1) and (G2), R1 to R4 each independently represent a linear or branched alkyl group having 12 or more and 26 or less carbon atoms).

6. A method for producing a printed product, the method comprising:
ejecting an ink droplet of the actinic radiation-curable inkjet ink according to any one of claims 1 to 4 from an inkjet recording head to cause the ink droplet to land on a recording medium; and
irradiating the ink droplet having landed on the recording medium with an active ray to cure the ink droplet.
